# EUROPEAN PATENT SPECIFICATION

(11) **EP 1 570 891 B1**
(45) Date of publication and mention of the grant of the patent: **30.06.2010**
(21) Application number: 03777169.8
(22) Date of filing: 01.12.2003
(51) Int. Cl.: B01D 39/00, C09K 3/10, B01D 27/00, B01D 27/06, B01D 27/08

(54) **METHOD FOR FORMING A SEALING PORTION ON A FILTRATION ELEMENT**
VERFAHREN ZUR HERSTELLUNG EINES DICHTUNGSTEILS AUF EINEM FILTRATIONSELEMENT
PROCEDE DE FORMATION D'UN JOINT SUR UN ELEMENT DE FILTRATION

(30) Priority: 03.12.2002 JP 2002351669
(43) Date of publication of application: 07.09.2005
(73) Proprietor: Toagosei Co., Ltd, Minato-ku, Tokyo 105-8419 (JP); Toyota Boshoku Kabushiki Kaisha, Kariya-shi, Aichi-ken 448-8651 (JP)
(72) Inventor: Takahashi, Shin, Nagoya-shi, Aichi 455-0027 (JP); Terai, Hiroyuki, Nagoya-shi, Aichi 455-0027 (JP)
(74) Representative: Kilian, Helmut
(86) International application number: PCT/JP2003/015316
(87) International publication number: WO 2004/050213

(56) References cited:
- WO-A1-95/11071
- JP-A- 6 192 468
- JP-A- 2002 037 947
- JP-A- 2003 181 212
- US-A- 5 028 330
- PATENT ABSTRACTS OF JAPAN vol. 0142, no. 95 (C-0732), 26 June 1990 (1990-06-26) & JP 02 092984 A (SEKISUI CHEM CO LTD), 3 April 1990 (1990-04-03)
- DATABASE WPI Week 199802 Derwent Publications Ltd., London, GB; AN 1998-014999 XP002362016 & JP 09 279103 A (SEKISUI CHEM IND CO LTD) 28 October 1997 (1997-10-28)

## Description

### Technical Field

The present invention relates to a filter element to be used mainly in automobile filter elements for the purpose of filtering liquids such as oils or gasoline, or gases such as air. More particularly, the invention relates to a sealant composition capable of easily forming a seal section in a filter element and to a method of forming a seal section using the sealant composition.

### Background Art

As filter units of such a type, there are known filter units in which a cylindrical filter element is contained in the interior of a filter case, the both ends of the filter element are sealed to divide the interior of the filter case into a dirty side in the outside of the filer element and a clean side in the inside thereof

There are also known cylindrical filter elements having a chrysanthemum cross section prepared by pleating a filter medium and bonding the both ends thereof

As such filter elements, for example, JP-A-10-57716 (claim 1 and paragraph number [0002]) discloses that a long sheet of paper or a paper material having long side edges is provided; a strip of a hot-melt adhesive is applied to a position several millimeters far from the edge; the sheet is folded like a concertina to form a plural number of laminated panels in such a manner that the one side face of the concertina-like assembly and a fold of the other side face alternately make a hinge-like structure; the panels are pressed each other so that a pair of alternate panels adjacent to each other are fixed; the assembly is then formed into a ring; and the end panels of the assembly are fixed to each other to form a cylindrical filter element having a chrysanthemum cross section.

In this case, to prevent a fluid in the dirty side from making a detour around the filter element and flowing into the clean side, end caps are fixed in the two ends of the formed chrysanthemum-like cylindrical filter element, thereby sealing the ends.

A seal member is made of a metal, plastic, rubber, etc., and is installed with an epoxy based adhesive or a hot-melt adhesive as in JP-A-10-57716.

As another method of using a hot-melt adhesive, there are known a method in which a seal member on which a heat melted hot-melt adhesive has been applied is compressed on the top and bottom end faces in a cylindrical filter element having a chrysanthemum cross section and then cooled to achieve bonding; or a method in which a seal member on which a hot-melt adhesive is previously applied is heat pressed to re-melt the hot melt and after attaining wetting at the interface, is cooled to achieve bonding.

Further, European Patent No. 447875B1 (claim 1) discloses a constitution in which a seal member constituted of a thermoplastic or the like and the end of an element body constituted of a paper filter or the like are bonded to each other by ultrasonic welding. According to the bonded structure using ultrasonic welding, it is possible to reduce the man-hour and time necessary for bonding as compared with the case of using a hot-melt adhesive or an epoxy adhesive.

US-A-5 028 330 and WO 95 11071 A1 disclose filter elements and a process for manufacturing filters using material cured by ultraviolet radiation for end caps. The sealant compositions used in the processes of US-A-5 028 330 and WO 95 11071 A1 comprise a photo-initiated polymer which is cured by exposure to an ultraviolet light source, wherein the mold is manufactured of glass or some other transparent material.

### Disclosure of the Invention

However, the above related-art technologies involved defects such that high temperatures are required to melt the hot melt adhesive or that expensive instruments such as ultrasonic welding machines must be used, and such is not economical, and were not satisfactory in productivity yet. An object of the present invention is to provide a method that is more excellent in productivity and is economical

The present inventors made extensive and intensive investigations regarding a sealant composition and a method of forming a seal section, which is capable of solving the above problems, leading to the accomplishment of the present invention.

Specifically, the present invention provides a method of forming a seal section which comprises fitting a sealant compositions in a groove of a molding die, the groove being formed coincident with a seal section to be formed on the top face and/or bottom of a cylindrical filter element having a chrysanthemum-like cross section formed by pleating a filter medium, setting the molding die in a seal section-forming portion on the top face and/or bottom of the filter element such that the filled sealant composition can be laminated, and irradiating the molding die with light to cure the sealant composition by the light having transmitted through the molding die, thereby forming a seal section on the top face and/or bottom of the chrysanthemum-like cylindrical filter element, characterized in that the sealant composition comprises a photopolymerization initiator sensitive to light having a wavelength of 380 nm or longer and a photo-curable acrylic compound having radical polymerizability, and has a viscosity before photo-curing of 800 mPa·s or more, the molding die comprises a material having permeability to light having a wavelength of 380 nm or longer, wherein the material is selected from the group consisting of polytetrafluoroethylene, ethylene fluoride-propylene copolymer resins, and perfluoroalkoxy resins, wherein the molding die is irradiated with light having a wavelength of 380 nm or longer to cure the sealant composition.

### Best Mode for Carrying Out the Invention

The sealant composition for filter element used in the method of the present invention (hereinafter simply referred to as "sealant composition") has photo-curing properties, and its resin component is a radically polymerizable, ethylenically double bond-containing compound, and is an acrylic compound having excellent photo-radical polymerizability.

Specific examples of acrylic compounds include polyfunctional acrylic compounds such as polyester based acrylic compounds, polyether based acrylic compounds, polyurethane based acrylic compounds, polycarbonate based acrylic compounds, and epoxy based acrylic resins; and monofunctional acrylic compounds such as alkyl (meth)acrylates (such as methyl acrylate and/or methyl methacrylate (the term "acrylate and/or methacrylate" will be hereinafter referred to as "(meth)acrylate"), ethyl (meth)acrylate, n-propyl (meth)acrylate, isopropyl (meth)acrylate, n-butyl (meth)acrylate, isobutyl (meth)acrylate, n-hexyl (meth)acrylate, n-octyl (meth)acrylate, isooctyl (meth)acrylate, 2-ethylhexyl (meth)acrylate, n-nonyl (meth)acrylate, isononyl (meth)acrylate, n-decyl (meth)acrylate, and n-lauryl (meth)acrylate), hydroxyl group-containing (meth)acrylates (such as 2-hydroxyethyl (meth)acrylate, 2-hydroxypropyl (meth)acrylate, 2-hydroxy-3-phenozypropyl (meth)acrylate, glycerol mono(meth)acrylate, polyethylene glycol mono(meth)acrylate, propylene glycol mono(meth)acrylate, and mono(meth)acrylate of a polyethylene glycol-polypropylene glycol copolymer), epoxy group-containing (meth)acrylates (such as glycidyl (meth)-acrylate), and (meth)acrylamides (such as (meth)acrylamide, N-methylol (meth)acrylamide, N-methoxymethyl (meth)acrylamide, and N-methoxybutyl (meth)acrylamide).

These acrylic compounds are properly selected and combined depending upon durability against components to be filtered, such as oils, and requirements for the design and specification of the filter including resin strength, flexibility, hardness and heat resistance. For example, to obtain durability against oils, it is preferable to compound a polyfunctional acrylic compound, preferably in an amount of 3 parts by weight or more of the whole acrylic compounds.

Any compounds can be used as the photopolymerization initiator used in the sealant composition so long as it can initiate polymerization with light having a wavelength of 380 nm or longer. Specific examples of the photopolymerization initiator used include hydrogen drawing type compounds such as 2-chlorothioxanthone, 2,3-diethylthioxanthone, camphorquinone, and 4,4'-dimethoxybenzil;and photocleavage type compounds such as trimethylbenzoyldiphenylphosphine oxide. However, the present invention is not limited to those compounds.

The addition amount of the photopolymerization initiator to be compounded wit the sealant composition is preferably 0.1-15 parts by weight, and more preferably 0.1-10 parts by weight, per 100 parts by weight of the ethylenically double bond-containing compound. When the compounding amount of the photopolymerization initiator is too small, even if a prescribed electromagnetic wave necessary for cleavage or hydrogen drawing is irradiated, curing cannot be sufficiently carried out. On the other hand, when the compounding amount is too large, not only further curing properties are not obtained, but also reduction in strength of the sealant cured material occurs.

The sealant composition of the present invention can contain optional components such as sensitizers, organic or inorganic thickeners, colorants such as dyes and pigments, antioxidants such as hindered phenol, stabilizers, and heat polymerization initiators such as peroxides.

The sealant composition has a viscosity before photo-curing of 800 mPa·s or more, and preferably 2,000 mPa·s or more. In the case where the viscosity is less than 800 mPa·s, impregnation of the sealant composition into the filter paper is large so that reduction in thickness causes, or liquid sag in the chrysanthemum-like tucks frequently occurs, thereby making it difficult to obtain a desired seal section. Although the viscosity before photo-curing of the sealant composition varies depending upon the temperature, it is considered in the present invention that the temperature is 0-50°C, which is usually considered as the temperature within the manufacture factory to be used upon forming the seal section. The sealant composition of the present invention is preferably used at a temperature of 150°C or lower, taking into account the heat stability.

As a light source used in the present invention, any light including an electromagnetic wave of 380 nm or longer by which the compounded photopolymerization initiator is excited can be used. From the industrial standpoint, examples of the light source are low-pressure mercury vapor lamps, high-pressure mercury vapor lamps, xenon lamps, metal halide lamps, and halogen lamps. The amount of the proper electromagnetic wave to be irradiated to the substrate surface is usually 200 mJ/cm² or more, and preferably from 500-10,000 mJ/cm².

The molding die used in the present invention is made of a material having permeability to light having a wavelength of 3 80 nm or longer and a solubility parameter of 8.5 or lower. From the reason that durability against the sealant composition is good, polytetrafluoroethylene, ethylene fluoride-propylene copolymer resins and perfluoroalkoxy resins, each having excellent heat resistance and mold release properties, are used. The molding die has a groove for filling the sealant composition, which is coincident with the seal section to be formed on the top face and/or bottom of the cylindrical filter element. It is possible to easily prepare seal sections coincident with the varied size and shape by only adjusting the groove shape into a desired size.

The solubility parameter as referred to herein means a strength at which molecular agglomerates gather. In the material of the molding die, in the case where the solubility parameter exceeds 8.5, wetting between the die and the sealant cured material becomes good so that mold release properties from the die becomes worse, and hence, such is not preferable.

By filling the sealant composition for filter element in the groove, setting the molding die in a seal section-forming portion on the top face and/or bottom of the filter element such that the filled sealant composition can be laminated, and irradiating the molding die with light having a wavelength of 380 nm or longer to cure the sealant composition by the electromagnetic wave having transmitted through the molding die, it is possible to form a seal section on the top face and/or bottom of the chrysanthemum type filter element.

### Example

The present invention is described in more detail with reference to the following Examples and Comparative Examples. In each Example and Comparative Example, the performance evaluation was carried out according to the following manners.

### Sealant composition:

As a photocurable composition sensitive to light having a wavelength of 380 nm or longer, a composition A having a viscosity of 1,000 mPa·s, a composition B having a viscosity of 2,000 mPa·s, a composition C having a viscosity of 5,000 mPa·s, and a composition D having a viscosity of 40,000 mPa·s, each containing an acrylic compound and a photopolymerization initiator as components, were used.

As a comparative ultraviolet light curable composition insensitive to light having a wavelength of 380 nm, a composition E having a viscosity of 1,000 mPa·s and a composition F having a viscosity of 7,000 mPa·s, each containing an acrylic compound and a photopolymerization initiator as components, were used.

As a comparative sample with respect to viscosity, a composition G having a viscosity of 300 mPa·s, which is sensitive to an electromagnetic wave of 380 nm or longer and contains an acrylic compound and a photopolymerization initiator as components, was used.

### Molding die:

Material: Made of polytetrafluoroethylene and perfluoroalkoxy resin
Die size: Die having an angular groove of 30 mm (length) x 5 mm (width) x 1 mm (depth)

The groove was provided so as to have the width and depth on the assumption that it is coincident with the seal section to be formed on the top surface and/or bottom of the chrysanthemum-like cylindrical filter element.

### Light irradiation unit and light irradiation condition:

Light source: 3.2 kW high-pressure mercury vapor lamp
Irradiation dose: Adjusted to 1,000 mJ/cm² in the lower side of the die
Irradiation time: 7 seconds

Measurement of amount of light: The measurement was carried out using a light receptor UVD-C405 having central light reception at a wavelength of 405 nm and an integrating photometer UIT-150, each of which is manufactured by Ushio Inc.

### Molding test method:

Each composition was filled in the die at 25°C, the die was set such that the photocurable composition came into contact with a filter paper, and a prescribed amount of electromagnetic wave was irradiated.

Curing properties and mold release properties: The curing state and mold release properties were confirmed during release of the cured material of each composition.

Moldability: In the case where the amount of impregnation into the filter paper before curing is too large due to influences of low viscosity and curing properties, a problem occurs in molding precision due to reduction in thickness. Accordingly, the moldability was confirmed.

### EXAMPLES 1 TO 4

Polytetrafluoroethylene was used as the material of the molding die, and the molding test was carried out using each of the compositions A to D.

As a result, both good curing properties and moldability were attained within a short period of time of light irradiation time of 7 seconds as shown in Table 1.

Further, within this viscosity range, the amount of impregnation into the filter paper did not influence the molding precision, and the moldability was good. It was confirmed that there is no problem in mold release properties so far as the material of the molding die is polytetrafluoroethylene.

**TABLE 1**

| Example | 1 | 2 | 3 | 4 |
|---|---|---|---|---|
| Composition | A | B | C | D |
| Viscosity at 25°C (mPa·s) | 1,000 | 2,000 | 5,000 | 40,000 |
| Material of die | Polytetrafluoroethylene | Polytetrafluoroethylene | Polytetrafluoroethylene | Polytetrafluoroethylene |
| Curing properties | Good | Good | Good | Good |
| Mold release properties | Good | Good | Good | Good |
| Moldability | Good | Good | Good | Good |

### EXAMPLES 5 TO 8

The molding test was carried out under the same condition as in Examples 1 to 4, except that the material of the molding die was changed to a perfluoroalkoxy resin.

As a result, both good curing properties and moldability were attained within a short period of time of light irradiation time of 7 seconds as shown in Table 2.

Within this viscosity range, the amount of impregnation into the filter paper did not influence the molding precision, and the moldability was good. It was confirmed that there is no problem in mold release properties so far as the material of the molding die is a perfluoroalkoxy resin.

**TABLE 2**

| Example | 5 | 6 | 7 | 8 |
|---|---|---|---|---|
| Composition | A | B | C | D |
| Viscosity at 25°C (mPa·s) | 1,000 | 2,000 | 5,000 | 40,000 |
| Material of die | Perfluoroalkoxy resin | Perfluoroalkoxy resin | Perfluoroalkoxy resin | Perfluoroalkoxy resin |
| Curing properties | Good | Good | Good | Good |
| Mold release properties | Good | Good | Good | Good |
| Moldability | Good | Good | Good | Good |

### COMPARATIVE EXAMPLES 1 AND 2

The molding test was carried out under the same condition as in Example 1, except for using each of the compositions E and F.

### EXAMPLE 9

The molding test was carried out under the same condition as in Example 1, except for using the composition G

As a result, as shown in Table 3, since ultraviolet light curing types such as the compositions E and F do not sufficiently cure, it is noted that they are improper as the sealant composition of the invention. In the case that the viscosity is low as in the composition G, impregnation into the filter paper is furious so that it is noted that this composition is not preferable as the sealant composition.

**TABLE 3**

| | Comparative Example 1 | Comparative Example 2 | Example 9 |
|---|---|---|---|
| Composition | E | F | G |
| Viscosity at 25°C (mPa·s) | 1,000 | 7,000 | 300 |
| Material of die | Polytetrafluoroethylene | Polytetrafluoroethylene | Polytetrafluoroethylene |
| Curing properties | Not cured | Not cured | Largely impregnated |
| Mold release properties | Impossible for evaluation | Impossible for evaluation | Largely impregnated |
| Moldability | Impossible for evaluation | Impossible for evaluation | Largely impregnated |

### Industrial Applicability

In accordance with the sealant composition and the method of forming a seal section according to the present invention, it is possible to easily prepare moldings coincident with the varied size and shape only by adjusting the groove shape of a molding die into a desired size. Further, since the sealant composition of the present invention is cured only upon irradiation with light within a short period of time, the present invention is excellent in productivity and economy.

## Claims

1. A method of forming a seal section which comprises filling a sealant composition in a groove of a molding die, the groove being formed coincident with a seal section to be formed on the top face and/or bottom of a cylindrical filter element having a chrysanthemum-like cross section formed by pleating a filter medium, setting the molding die In a seal section-forming portion on the top face and/or bottom of the filter element such that the filled sealant composition can be laminated, and irradiating the molding die with light to cure the sealant composition by the light having transmitted through the molding die, thereby forming a seal section on the top face and/or bottom of the chrysanthemum-like cylindrical filter element,
**characterized in that** the sealant composition comprises a photopolymerization initiator sensitive to light having a wavelength of 380 nm or longer and a photo-curable acrylic compound having radical polymerizability, and has a viscosity before photo-curing of 800 mPa·s or more,
the molding die comprises a material having permeability to light having a wavelength of 380 nm or longer, wherein the material is selected from the group consisting of polytetrafluoroethylene, ethylene fluoride-propylene copolymer resins, and perfluoroalkoxy resins, wherein
the molding die is irradiated with light having a wavelength of 380 nm or longer to cure the sealant composition.

2. The method as claimed in claim 1, wherein a polyfunctional acrylic compound is compounded as the acrylic compound having radical polymerizability.

3. The method as claimed in claim 2, wherein the polyfunctional acrylic compound of the sealant composition is compounded in an amount of 3 parts by weight or more to the total acrylic compounds.

4. The method as claimed in any one of claims 1to 3, wherein addition amount of the photopolymerization initiator in the sealant composition is 0.1-15 parts by weight per 100 parts by weight of the acrylic compound.

5. The method as claimed in claim 4, wherein addition amount of the photopolymerization initiator in the sealant composition is 0.1-10 parts by weight per 100 parts by weight of the acrylic compound.

6. The method as claimed in any one of claims 1 to 5, wherein the sealant composition has a viscosity before photo-curing of 2,000 mPa·s or more.

7. The method as claimed in any one of claims 1 to 6, wherein the irradiation dose of light having a wavelength of 380 nm or longer is 200 mJ/cm² or more.

8. The method as claimed in claim 7, wherein the irradiation dose of light having a wavelength of 380 nm or longer is 500-10,000 mJ/cm² or more.

## Patentansprüche

1. Verfahren zur Herstellung eines Dichtungsteils, umfassend das Einfüllen einer Dichtmittelzusammensetzung in eine Aussparung einer Gussform, wobei die Aussparung koinzident mit einem Dichtungsteil geformt ist, welches auf der Oberseite und/oder Unterseite eines zylindrischen Filterelements, welches einen durch Falten eines Filtermediums gebildeten Chrysanthemen-artigen Querschnitt aufweist, ausgebildet werden soll, das Einsetzen der Gussform in einen das Dichtungsteil bildenden Abschnitt auf der Oberseite und/oder Unterseite des Filterelements, derart, dass die eingefüllte Dichtmittelzusammensetzung laminiert werden kann, und Bestrahlen der Gussform mit Licht, um die Dichtmittelzusammensetzung durch das Licht, welches durch die Gussform transmittiert, zu härten, wodurch ein Dichtungsteil auf der Oberseite und/oder Unterseite des Chrysanthemen-artigen zylindrischen Filterelements ausgebildet wird,
**dadurch gekennzeichnet, dass** die Dichtmittelzusammensetzung einen Photopolymerisationsinitiator, der auf Licht mit einer Wellenlänge von 380 nm oder länger anspricht, und eine lichthärtbare, acrylische, radikalisch polymerisierbare Verbindung umfasst und vor dem Lichthärten eine Viskosität von 800 mPa·s oder mehr aufweist,
die Gussform ein Material umfasst, welches eine Permeabilität für Licht mit einer Wellenlänge von 380 nm oder länger aufweist, wobei das Material ausgewählt ist aus der Gruppe bestehend aus Polytetrafluorethylen, Ethylenfluorid-Propylen-Copolymer-Harzen und Perfluoralkoxyharzen, wobei
die Gussform mit Licht bestrahlt wird, welches eine Wellenlänge von 380 nm oder länger aufweist, um die Dichtmittelzusammensetzung zu härten.

2. Verfahren gemäß Anspruch 1, wobei eine polyfunktionelle Acrylverbindung als acrylische, radikalisch polymerisierbare Verbindung zugesetzt wird.

3. Verfahren gemäß Anspruch 2, wobei die polyfunktionelle Acrylverbindung der Dichtmittelzusammensetzung in einer Menge von 3 Gewichtsteilen oder mehr der gesamten acrylischen Verbindungen zugesetzt wird.

4. Verfahren gemäß einem der Ansprüche 1 bis 3, wobei die zugegebene Menge an Photopolymerisationsinitiator in der Dichtmittelzusammensetzung 0,1-15 Gewichtsteile pro 100 Gewichtsteile der acrylischen Verbindung beträgt.

5. Verfahren gemäß Anspruch 4, wobei die zugegebene Menge des Photopolymerisationsinitiators in der Dichtmittelzusammensetzung 0,1-10 Gewichtsteile pro 100 Gewichtsteile der acrylischen Verbindung beträgt.

6. Verfahren gemäß einem der Ansprüche 1 bis 5, wobei die Dichtmittelzusammensetzung vor dem Lichthärten eine Viskosität von 2000 mPa·s oder mehr aufweist.

7. Verfahren gemäß einem der Ansprüche 1 bis 6, wobei die Bestrahlungsdosis des Lichts mit einer Wellenlänge von 380 nm oder länger 200 mJ/cm² oder mehr beträgt.

8. Verfahren gemäß Anspruch 7, wobei die Bestrahlungsdosis des Lichts mit einer Wellenlänge von 380 nm oder länger 500-10.000 mJ/cm² oder mehr beträgt.

## Revendications

1. Procédé de formation d'une section de joint d'étanchéité qui comprend le remplissage d'une composition de matériau d'étanchéité dans une rainure d'une filière de moulage, la rainure étant formée de manière coïncidente avec une section de joint d'étanchéité à former sur la face supérieure et/ou le fond d'un élément de filtre cylindrique présentant une section transversale en forme de chrysanthème formé en rempliant un milieu de filtre, en fixant la filière de moulage dans une portion formant une section de joint d'étanchéité sur la face supérieure et/ou le fond de l'élément de filtre de telle sorte que la composition de matériau d'étanchéité chargée peut être stratifiée, et en irradiant la filière de moulage avec de la lumière pour faire durcir la composition de matériau d'étanchéité par la lumière transmise à travers la filière de moulage, formant par la une section de joint d'étanchéité sur la face supérieure et/ou le fond de l'élément de filtre cylindrique en forme de chrysanthème,
**caractérisé en ce que** la composition de matériau d'étanchéité comprend un initiateur de photopolymérisation sensible à la lumière ayant une longueur d'onde de 380 nm ou supérieure et un composé acrylique photodurcissable présentant une aptitude à la polymérisation radicalaire, et présente une viscosité avant le photodurcissement de 800 mPa.s ou supérieure,
la filière de moulage comprend un matériau présentant une perméabilité à la lumière ayant une longueur d'onde de 380 nm ou supérieure, où le matériau est choisi dans le groupe constitué du polytétrafluoroéthylène, de résines de copolymères de fluorure d'éthylène-propylène et de résines perfluoroalcoxy, dans lequel
la filière de moulage est irradiée avec de la lumière ayant une longueur de 380 nm ou supérieure pour faire durcir la composition de matériau d'étanchéité.

2. Procédé selon la revendication 1, dans lequel une composé acrylique polyfonctionnel est combiné comme composé acrylique présentant une aptitude à la polymérisation radicalaire,

3. Procédé selon la revendication 2, dans lequel le composé acrylique polyfonctionnel de la composition de matériau d'étanchéité est combiné dans une quantité de 3 parties en poids ou supérieure par rapport à tous les composés acryliques.

4. Procédé selon l'une quelconque des revendications 1 à 3, dans lequel la quantité d'addition de l'initiateur de photopolymérisation dans la composition de matériau d'étanchéité est de 0,1-15 parties en poids pour 100 parties en poids du composé acrylique.

5. Procédé selon la revendication 4, dans lequel la quantité d'addition de l'initiateur de photopolymérisation dans la composition de matériau d'étanchéité est de 0,1-10 parties en poids pour 100 parties en poids du composé acrylique.

6. Procédé selon l'une quelconque des revendications 1 à 5, dans lequel la composition de matériau d'étanchéité présente une viscosité avant le photodurcissement de 2 000 mPa·s ou supérieure.

7. Procédé selon l'une quelconque des revendications 1 à 6, dans lequel la dose d'irradiation de lumière présentant une longueur d'onde de 380 nm ou supérieure est de 200 mJ/cm² ou supérieure.

8. Procédé selon la revendication 7, dans lequel la dose d'irradiation de lumière présentant une longueur d'onde de 380 nm ou supérieure est de 500-10 000 mJ/cm² ou supérieure.
